# EUROPÄISCHE PATENTANMELDUNG

(11) **EP 2 915 632 A1**
(43) Veröffentlichungstag der Anmeldung: **09.09.2015**
(21) Anmeldenummer: 14158227.0
(22) Anmeldetag: 07.03.2014
(51) Int. Cl.: B25F 5/00, B25B 23/147

(54) **Adaptive Getriebeschaltung**

(71) Anmelder: HILTI Aktiengesellschaft, 9494 Schaan (LI)
(72) Erfinder: Sattler, Christian, 87640 Biessenhofen (DE)
(74) Vertreter: Hilti Aktiengesellschaft Corporate Intellectual Property

(57) **Zusammenfassung**

Verfahren zum Steuern einer Werkzeugmaschine (1) enthaltend einen Motor (3) als Antrieb für die Werkzeugmaschine (1); eine Steuerungseinrichtung (4); eine Getriebeeinrichtung (5) mit wenigstens einem ersten Gang und einem zweiten Gang; ein Werkzeug (7), beispielsweise eine Bohrkrone; einen ersten Sensor (10) zum Erfassen der Drehzahl wenigstens eines Bauteils der Getriebeeinrichtung (5); und einen zweiten Sensor (20) zum Erfassen der Drehzahl des Motors (3). Das Verfahren enthält die Verfahrensschritte:
- Ermitteln einer ersten Drehzahl der Getriebeeinrichtung (5) in einem ersten Gang,
- Ermitteln einer ersten Drehzahl des Motors (3) in einem ersten Gang eingestellt ist,
- Ermitteln des Einlegens eines ersten Gangs anhand eines Verhältnisses der Getriebeeinrichtungsdrehzahl und Motordrehzahl entsprechend Lookup-Tabelle;
- Einstellen des Leerlaufs;
- Ermitteln des eingestellten Leerlaufs anhand eines Verhältnisses der Getriebeeinrichtungsdrehzahl und der Motordrehzahl entsprechend Lookup-Tabelle;
- Anpassen der Motordrehzahl auf einen zweiten Gang anhand eines Verhältnisses der Getriebeeinrichtungsdrehzahl und Motordrehzahl entsprechend Lookup-Tabelle, und
- Einstellen eines zweiten Ganges.

Werkzeugmaschine zur Verwendung des Verfahrens.

## Beschreibung

Die vorliegende Erfindung bezieht sich auf ein Verfahren zum Steuern einer Werkzeugmaschine, insbesondere eine Kernbohrmaschine, enthaltend einen Motor als Antrieb für die Werkzeugmaschine, eine Steuerungseinrichtung, eine Getriebeeinrichtung mit wenigstens einem ersten Gang, einem zweiten Gang sowie einem Leerlauf, ein Werkzeug, beispielsweise einer Bohrkrone, einen ersten Sensor zum Erfassen der Drehzahl wenigstens eines Bauteils der Getriebeeinrichtung und einen zweiten Sensor zum Erfassen der Drehzahl des Motors.

Darüber hinaus bezieht sich die Erfindung auf eine Werkzeugmaschine, insbesondere eine Kernbohrmaschine, enthaltend einen Motor als Antrieb für die Werkzeugmaschine, eine Steuerungseinrichtung, eine Getriebeeinrichtung mit wenigstens einem ersten Gang, einem zweiten Gang sowie einem Leerlauf, ein Werkzeug, beispielsweise einer Bohrkrone, einen ersten Sensor zum Erfassen der Drehzahl wenigstens eines Bauteils der Getriebeeinrichtung und einen zweiten Sensor zum Erfassen der Drehzahl des Motors zur Anwendung des erfindungsgemässen Verfahrens.

Werkzeugmaschinen, wie z.B. Kernbohrmaschine dienen im Allgemeinen dazu Löcher in mineralische Werkstoffe, wie z.B. Beton oder Ziegel, zu schneiden. Das Kernbohrgerät enthält dabei für gewöhnlich einen Elektromotor, eine Getriebeeinrichtung, eine Steuerungseinrichtung bzw. ein Steuergerät, eine Werkzeugaufnahme sowie ein Werkzeug in Form einer Bohrkrone. Der Elektromotor treibt über die Getriebeeinrichtung die Werkzeugaufnahme samt Werkzeug an. Die Getriebeeinrichtung verfügt üblicherweise über zwei Gänge sowie einen Leerlauf, welche manuell durch den Anwender der Kernbohrmaschine einstellbar bzw. einlegbar sind. Mit Hilfe der einzelnen Gänge wird auf unterschiedliche Weise die Motordrehzahl auf die Antriebsdrehzahl übersetzt. Je nach Übersetzung können damit entweder eine hohe Drehzahl und ein niedriges Drehmoment oder eine niedrige Drehzahl und ein hohes Drehmoment an der Bohrkrone zur Verfügung stehen. Die in eine Drehbewegung versetzte Bohrkrone schneidet mit Hilfe des diamantenbesetzen Bohrkronenschneiderands ein ringförmiges Loch in den Werkstoff, wodurch ein zylindrischer Bohrkern entsteht. Dieser Bohrkern wird nach Beendigung des Bohr- bzw. Schneidevorgangs aus dem Bohrloch entfernt.

Eine Kernbohrmaschine gemäß dem Stand der Technik ist in der deutschen Patentanmeldung 10 2011 089 771 offenbart. Das als Kernbohrmaschine ausgestaltete Werkzeuggerät umfasst eine Antriebseinrichtung mit einem Antriebsmotor und einer Antriebswelle, eine Abtriebseinrichtung mit einer Abtriebswelle, eine Getriebeeinrichtung mit einem Planetengetriebe und einer weiteren Getriebeeinheit sowie eine Vorrichtung zum Schalten zwischen einer ersten und zweiten Obersetzungsstufe des Planetengetriebes.

Ein weit verbreitetes Problem bei den Kernbohrmaschinen gemäß dem Stand der Technik besteht in den nicht-synchronisierten Getriebeeinrichtungen, die ein Schalten von einem Gang in einen anderen Gang umständlich und zeitraubend macht. Aufgrund des Drehzahlenunterschiedes zwischen dem Motor (als Antrieb) und dem als nächstes einzulegenden Gang (als Abtrieb) ist ein Gangwechsel bei einer nicht-synchronisierten Getriebeeinrichtung nur bei stehender (d.h. nicht rotierender) Abtriebswelle und ausgeschalteten Motor möglich. Um schließlich einen Gangwechsel durchzuführen, muss die Abtriebswelle von Hand so in die richtige Position gedreht werden bis die entsprechenden Zahnräder der Antriebswelle und der Abtriebswelle ineinandergreifen und formschlüssig verbunden sind.

Ein derartig durchgeführter Gangwechsel ist zeitaufwendig und entsprechend ineffizient, da bei jedem Gangwechsel erst der Motor und die Getriebeeinrichtung vollständig angehalten und anschließend wieder in Betrieb genommen wird.

**Aufgabe der vorliegenden Erfindung** ist es dieses vorstehend beschriebene Problem zu lösen und ein Verfahren zum Steuern einer Werkzeugmaschine, insbesondere eine Kernbohrmaschine, sowie eine Werkzeugmaschine, insbesondere eine Kernbohrmaschine, zur Verwendung dieses Verfahrens zur Verfügung zu stellen, mit dem ein Gangwechsel schneller und effektiver durchgeführt werden kann.

Diese **Aufgabe** wird erfindungsgemäss durch den Gegenstand des unabhängigen Anspruchs 1 und 4 gelöst. Weitere Ausführungsformen des erfindungsgemässen Gegenstands finden sich in den abhängigen Ansprüchen.

Hierzu ist ein Verfahren gezeigt zum Steuern einer Werkzeugmaschine, insbesondere eine Kernbohrmaschine, enthaltend
- einen Motor als Antrieb für die Werkzeugmaschine;
- eine Steuerungseinrichtung;
- eine Getriebeeinrichtung mit wenigstens einem ersten Gang und einem zweiten Gang;
- ein Werkzeug, beispielsweise einer Bohrkrone;
- einen ersten Sensor zum Erfassen der Drehzahl wenigstens eines Bauteils der Getriebeeinrichtung; und
- einen zweiten Sensor zum Erfassen der Drehzahl des Motors.

Erfindungsgemäss sind die Verfahrensschritte:
- Ermitteln einer ersten Drehzahl des wenigstens einen Bauteils der Getriebeeinrichtung, wenn die Getriebeeinrichtung in einem ersten Gang eingestellt ist,
- Ermitteln einer ersten Drehzahl des Motors, wenn die Getriebeeinrichtung in einem ersten Gang eingestellt ist,
- Ermitteln des Einlegens des ersten Gangs anhand eines ersten vorbestimmten Verhältnisses der ersten Drehzahl des wenigstens einen Bauteils der Getriebeeinrichtung und der ersten Drehzahl des Motors entsprechend einer Lookup-Tabelle;
- Einstellen des Leerlaufs der Getriebeeinrichtung;
- Ermitteln des eingestellten Leerlaufs anhand eines zweiten vorbestimmten Verhältnisses einer zweiten Drehzahl des wenigstens einen Bauteils der Getriebeeinrichtung und einer zweiten Drehzahl des Motors entsprechend der Lookup-Tabelle;
- Anpassen der Drehzahl des Motors auf einen zweiten Gang anhand eines dritten vorstimmten Verhältnisses einer dritten Drehzahl des wenigstens einen Bauteils der Getriebeeinrichtung und einer dritten Drehzahl des Motors entsprechend der Lookup-Tabelle, und
- Einstellen eines zweiten Ganges
vorgesehen. Der erste Gang kann dabei niedriger oder höher als der zweite Gang sein. Durch die entsprechende Anpassung der Drehzahl des Motors auf den niedrigeren oder höheren Gang kann der Gangwechsel bei rotierender Antriebswelle durchgeführt werden, wodurch der Gangwechsel insgesamt schneller und effizienter erfolgt.

Darüber hinaus ist eine Werkzeugmaschine gezeigt, insbesondere eine Kernbohrmaschine, enthaltend
- einen Motor als Antrieb für die Werkzeugmaschine;
- eine Steuerungseinrichtung;
- eine Getriebeeinrichtung mit wenigstens einem ersten Gang und einem zweiten Gang;
- ein Werkzeug, beispielsweise einer Bohrkrone;
- einen ersten Sensor zum Erfassen der Drehzahl wenigstens eines Bauteils der Getriebeeinrichtung; und
- einen zweiten Sensor zum Erfassen der Drehzahl des Motors
zur Verwendung des erfindungsgemäßen Verfahrens.

Gemäss einer weiteren vorteilhaften Ausgestaltung der vorliegenden Erfindung kann vorgesehen sein, dass das Anpassen der Drehzahl des Motors durch ein Erhöhen der Drehzahl des Motors verwirklicht ist. Durch ein Erhöhen der Drehzahl des Motors wird die Drehgeschwindigkeit auf die höhere Drehgeschwindigkeit des niedrigeren Gangs so angepasst, dass ein Schalten in den niedrigeren Gang bei rotierender Antriebs- und Abtriebswelle möglich ist.

Des Weiteren kann entsprechend einer weiteren vorteilhaften Ausgestaltung der vorliegenden Erfindung vorgesehen sein, dass das Anpassen der Drehzahl des Motors durch ein Verringern der Drehzahl des Motors verwirklicht ist. Durch ein Verringern der Drehzahl des Motors wird die Drehgeschwindigkeit auf die niedrigere Drehgeschwindigkeit des höheren Gangs so angepasst, dass ein Schalten in den höheren Gang möglich ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.
Es zeigen:
- Fig. 1: eine erfindungsgemässe als Kernbohrmaschine ausgebildete Werkzeugmaschine mit einem Motor, einer Steuerungseinrichtung, einer Getriebeeinrichtung, einem als Bohrkrone ausgebildeten Werkzeug, einem ersten Sensor und einem zweiten Sensor;
- Fig. 2: erstes Ablaufdiagramm des erfindungsgemässen Verfahrens; und
- Fig. 3: zweites Ablaufdiagramm des erfindungsgemässen Verfahrens.

### Ausführungsbeispiel:

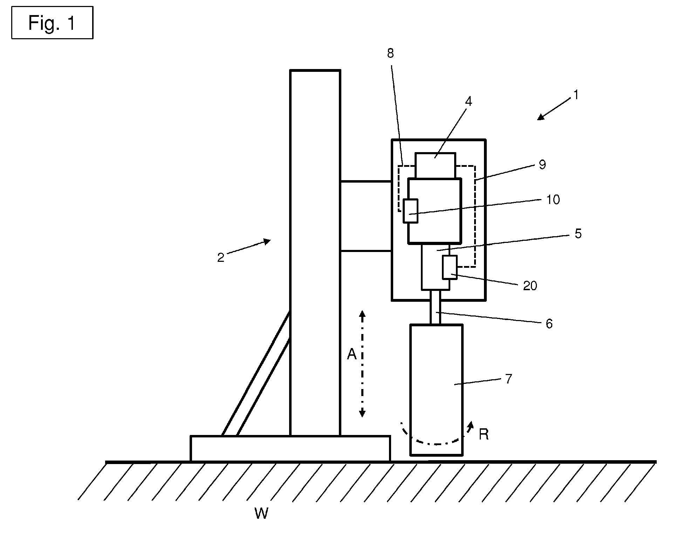

Fig. 1 zeigte eine als Kernbohrmaschine ausgestaltete Werkzeugmaschine 1, die an einem Bohrständer 2 befestigt ist. Mit Hilfe des Bohrständers 2 kann die Kernbohrmaschine 1 entlang der Doppelpfeilrichtung A reversibel auf das zu bearbeitende Werkstück W zu- und wieder wegbewegt werden. Bei dem Werkstoff W handelt es sich um Beton.

Die Kernbohrmaschine 1 enthält einen Motor 3, eine Steuerungseinrichtung 4, eine Getriebeeinrichtung 5, eine Abtriebswelle 6, ein als Bohrkrone ausgestaltetes Werkzeug 7, einen ersten Sensor 10 zum Erfassen der Drehzahl der Getriebeeinrichtung 5 und einen zweiten Sensor 20 zum Erfassen der Drehzahl des Motors 3. Als Motor 3 kann jegliche Art von Elektromotor eingesetzt werden.

Der Motor 3 ist als Elektromotor ausgestaltet und dient zum Antreiben der Bohrkrone 7. Der Motor 3 enthält eine (nicht gezeigte) Antriebswelle, welche mit der Getriebeeinrichtung 5 lösbar verbunden. Die Verbindung wird über eine nicht gezeigte Kupplung verwirklicht. Über die Getriebeeinrichtung 5 und die Abtriebswelle 6 wird die Bohrkrone 7 in eine Drehbewegung versetzt. Das in dem Motor 3 erzeugte Drehmoment wird somit auf die Bohrkrone 7 entsprechend übertragen, um ein Bohrloch in den Werkstoff W zu schneiden.

Die Getriebeeinrichtung 5 enthält einen ersten Gang, einen zweiten Gang und einen Leerlaufgang und ist zwischen der Antriebswelle des Motors 3 und der Abtriebswelle 6 positioniert. Die einzelnen Gänge lassen sich manuell über eine (nicht gezeigte) Gangwahleinrichtung einstellen, um somit die Übersetzung der Drehzahl und des Drehmoments von dem Motor 3 zu der Abtriebswelle 6 bzw. Bohrkrone 7 zu variieren.

Der erste Sensor 10 ist so an der Getriebeeinrichtung 5 positioniert, dass die Drehzahl des jeweils eingestellten Gang erfasst wird. Der zweite Sensor 20 ist hingegen so positioniert, dass die Drehzahl des Motors 3 erfasst wird.

Die Steuerungseinrichtung 4 ist über eine erste Leitung 8 mit dem ersten Sensor 10 und über eine zweite Leitung 9 mit dem zweiten Sensor 20 so verbunden, dass die von den Sensoren 10, 20 gemessenen Drehzahlwerte zu der Steuerungseinrichtung 4 übertragen werden. Darüber hinaus ist die Steuerungseinrichtung 4 so mit dem Motor 3 verbunden, dass die Steuerungseinrichtung 4 direkt die Drehzahl des Motors 3 variieren kann. Die Steuerungseinrichtung 4 enthält einen (nicht gezeigten) Datenspeicher, in dem eine Lookup-Tabelle (Übersetzungstabelle) hinterlegt ist. Durch diese Lookup-Tabelle ist der jeweils eingelegte Gang anhand des Verhältnisses der Drehzahl des Motors 3 und der dazu entsprechenden Drehzahl der Getriebeeinrichtung 5 ermittelbar. Durch die Verbindung der Steuerungseinrichtung 4 zu dem Motor 3 kann diese auf die Drehzahl des Motors 3 einwirken, d.h. die Drehzahl des Motors 3 entweder automatisch erhöhen oder verringern.

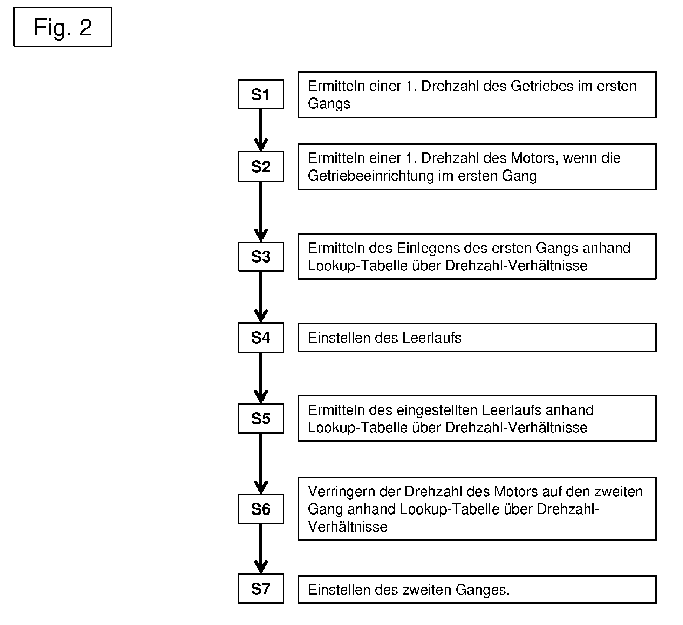

Fig. 2 zeigt den Ablauf eines Schaltvorgangs von einem ersten Gang in einen zweiten (d.h. höheren) Gang gemäß dem erfindungsgemäßen Verfahrens.

Hierzu wird im Schritt **S1** zunächst durch den ersten Sensor die Drehzahl der Getriebeeinrichtung 5 im ersten Gang ermittelt.

Im Schritt **S2** wird durch den zweiten Sensor die Drehzahl des Motors 3 ermittelt.

Im Schritt **S3** wird mittels der im Datenspeicher hinterlegten Lookup-Tabelle sowie der ermittelten Drehzahl des Motors 3 und der Getriebeeinrichtung 5 das Einlegen des ersten Gangs bestimmt.

Im Schritt **S4** wird der Leerlaufgang in der Getriebeeinrichtung 5 eingestellt. Wie bereits vorstehend beschrieben erfolgt dies über eine nicht dargestellte Gangwahleinrichtung.

Im Schritt **S5** wird mittels der Lookup-Tabelle sowie der ermittelten Drehzahl des Motors 3 und der Getriebeeinrichtung 5 das Einlegen des Leerlaufgangs bestimmt.

Im Schritt **S6** wird mit Hilfe der Steuerungseinrichtung 4 sowie anhand der in den Schritten **S3** und **S5** ermittelten Daten festgestellt, dass zunächst der erste Gang eingelegt war und anschließend der Leerlauf eingelegt wurde. Aus diesem Vorgang bzw. den dazu entsprechenden Daten ermittelt die Steuerungseinrichtung 4, dass der Anwender der Kernbohrmaschine 1 als nächstes den zweiten, d.h. den höheren Gang einlegen möchte. Um die Drehzahl des Motors 3 und die Drehzahl der Getriebeeinrichtung 5 für einen schnellen und effizienten Gangwechsel aufeinander abzustimmen, d.h. zu synchronisieren, wird die Drehzahl des Motors 3 auf die in der Lookup-Tabelle hinterlegte Drehzahl für den zweiten Gang verringert. Wenn die Drehzahl des Motors 3 auf die entsprechende Drehzahl des zweiten Gangs angepasst (verringert) wurde, wird dies dem Anwender durch ein Signal angezeigt. Das Signal wird durch eine nicht dargestellt oder im Detail genauer beschriebene Signaleinrichtung erzeugt. Das Signal kann dabei visueller und/oder akustischer Art sein. Der Anwender ist nun mit Hilfe des Signals in der Lage zu erkennen, wann und dass die Drehzahl des Motors 3 sowie der Getriebeeinrichtung 5 zueinander synchron sind, um im Schritt **S7** den zweiten Gang schnell und effizient einzulegen.

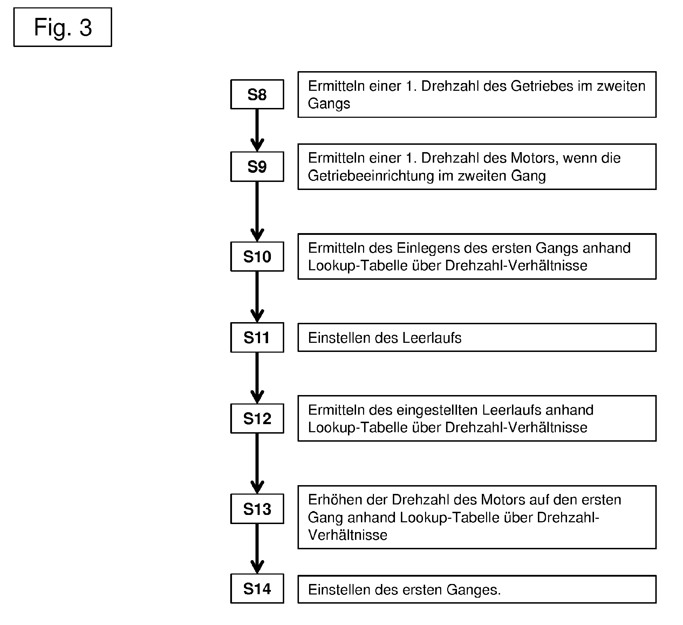

Im Gegensatz zu Fig. 2 zeigt Fig. 3 den Ablauf eines Schaltvorgangs von dem zweiten Gang in den ersten (d.h. niedrigeren) Gang gemäß dem erfindungsgemäßen Verfahrens.

Hierzu wird im Schritt **S8** zunächst durch den ersten Sensor die Drehzahl der Getriebeeinrichtung 5 im zweiten Gang ermittelt.

Im Schritt **S9** wird durch den zweiten Sensor die Drehzahl des Motors 3 ermittelt.

Im Schritt **S10** wird mittels der im Datenspeicher hinterlegten Lookup-Tabelle sowie der ermittelten Drehzahl des Motors 3 und der Getriebeeinrichtung 5 das Einlegen des zweiten Gangs bestimmt.

Im Schritt **S11** wird der Leerlaufgang in der Getriebeeinrichtung 5 eingestellt. Wie bereits vorstehend beschrieben erfolgt dies über die nicht dargestellte Gangwahleinrichtung.

Im Schritt **S12** wird mittels der Lookup-Tabelle sowie der ermittelten Drehzahl des Motors 3 und der Getriebeeinrichtung das Einlegen des Leerlaufgangs bestimmt.

Im Schritt **S13** wird mit Hilfe der Steuerungseinrichtung 4 sowie anhand der in den Schritten **S10** und **S12** ermittelten Daten festgestellt, dass zunächst der zweite Gang eingelegt war und anschließend der Leerlauf eingelegt wurde. Aus diesem Vorgang bzw. den dazu entsprechenden Daten ermittelt die Steuerungseinrichtung 4, dass der Anwender der Kernbohrmaschine 1 als nächstes den ersten, d.h. den niedrigeren Gang einlegen möchte. Um die Drehzahl des Motors 3 und die Drehzahl der Getriebeeinrichtung 5 für einen schnellen und effizienten Gangwechsel aufeinander abzustimmen, d.h. zu synchronisieren, wird die Drehzahl des Motors 3 auf die in der Lookup-Tabelle hinterlegte Drehzahl für den ersten Gang erhöht. Wenn die Drehzahl des Motors 3 auf die entsprechende Drehzahl des zweiten Gangs angepasst (erhöht) wurde, wird dies dem Anwender durch das bereits vorstehend beschriebene Signal angezeigt. Der Anwender ist nun in der Lage zu erkennen, wann und dass die Drehzahl des Motors 3 sowie der Getriebeeinrichtung 5 zueinander synchron sind, um im Schritt **S14** den ersten Gang schnell und effizient einzulegen.

## Patentansprüche

1. Verfahren zum Steuern einer Werkzeugmaschine (1), insbesondere eine Kernbohrmaschine, enthaltend
- einen Motor (3) als Antrieb für die Werkzeugmaschine (1);
- eine Steuerungseinrichtung (4);
- eine Getriebeeinrichtung (5) mit wenigstens einem ersten Gang, einem zweiten Gang sowie einem Leerlauf;
- ein Werkzeug (7), beispielsweise eine Bohrkrone;
- einen ersten Sensor (10) zum Erfassen der Drehzahl wenigstens eines Bauteils der Getriebeeinrichtung (5); und
- einen zweiten Sensor (20) zum Erfassen der Drehzahl des Motors (3)
**gekennzeichnet durch** die Verfahrensschritte
- Ermitteln einer ersten Drehzahl des wenigstens einen Bauteils der Getriebeeinrichtung (5), wenn die Getriebeeinrichtung (5) in einem ersten Gang eingestellt ist,
- Ermitteln einer ersten Drehzahl des Motors (3), wenn die Getriebeeinrichtung (5) in dem ersten Gang eingestellt ist,
- Ermitteln des Einlegens des ersten Gangs anhand eines ersten vorbestimmten Verhältnisses der ersten Drehzahl des wenigstens einen Bauteils der Getriebeeinrichtung (5) und der ersten Drehzahl des Motors (3) entsprechend einer Lookup-Tabelle;
- Einstellen des Leerlaufs der Getriebeeinrichtung (5);
- Ermitteln des eingestellten Leerlaufs anhand eines zweiten vorbestimmten Verhältnisses einer zweiten Drehzahl des wenigstens einen Bauteils der Getriebeeinrichtung (5) und einer zweiten Drehzahl des Motors entsprechend der Lookup-Tabelle;
- Anpassen der Drehzahl des Motors (3) auf einen zweiten Gang anhand eines dritten vorstimmten Verhältnisses einer dritten Drehzahl des wenigstens einen Bauteils der Getriebeeinrichtung (5) und einer dritten Drehzahl des Motors (3) entsprechend der Lookup-Tabelle, und
- Einstellen eines zweiten Ganges.

2. Verfahren nach Anspruch 1,
**dadurch gekennzeichnet, dass** das Anpassen der Drehzahl des Motors (3) durch ein Erhöhen der Drehzahl des Motors (3) verwirklicht ist.

3. Verfahren nach Anspruch 1,
**dadurch gekennzeichnet, dass** das Anpassen der Drehzahl des Motors (3) durch ein Verringern der Drehzahl des Motors (3) verwirklicht ist.

4. Werkzeugmaschine (1), insbesondere eine Kernbohrmaschine, enthaltend
- einen Motor (3) als Antrieb für die Werkzeugmaschine (1);
- eine Steuerungseinrichtung (4);
- eine Getriebeeinrichtung (5) mit wenigstens einem ersten Gang und einem zweiten Gang;
- ein Werkzeug (7), beispielsweise einer Bohrkrone;
- einen ersten Sensor (10) zum Erfassen der Drehzahl wenigstens eines Bauteils der Getriebeeinrichtung (5); und
- einen zweiten Sensor (20) zum Erfassen der Drehzahl des Motors (3)
zur Verwendung des Verfahrens nach wenigstens einem der Ansprüche 1 bis 3.
